Europäisches Patentamt

European Patent Office

Office européen des brevets

(19)

(11) **EP 1 162 443 A2**

(12) **EUROPÄISCHE PATENTANMELDUNG**

(43) Veröffentlichungstag:
    **12.12.2001 Patentblatt 2001/50**

(51) Int Cl.⁷: **G01M 17/04**

(21) Anmeldenummer: **01110721.6**

(22) Anmeldetag: **03.05.2001**

(84) Benannte Vertragsstaaten:
    **AT BE CH CY DE DK ES FI FR GB GR IE IT LI LU
    MC NL PT SE TR**
    Benannte Erstreckungsstaaten:
    **AL LT LV MK RO SI**

(30) Priorität: **10.06.2000 DE 10028749**

(71) Anmelder: **Bayerische Motoren Werke
    Aktiengesellschaft
    80809 München (DE)**

(72) Erfinder:
    • **Wimmer, Markus
       80999 München (DE)**
    • **Vos, Serge
       80797 München (DE)**
    • **Jautze, Marcus
       81543 München (DE)**

(54) **Verfahren und Vorrichtung zum Erkennen von Dämpferschäden**

(57)    Das erfindungsgemäße Verfahren bzw. die erfindungsgemäße Vorrichtung zum Erkennen von Dämpferschäden zeichnet sich dadurch aus, daß Eigenschaften eines Dämpfers durch Auswerten eines Signals eines Antiblockiersystem-Raddrehzahlsensors ermittelt werden.

Fig. 6

**Beschreibung**

Die Erfindung betrifft ein Verfahren und eine Vorrichtung zum Erkennen von Dämpferschäden, insbesondere zum Erkennen von Dämpferschäden von Kraftfahrzeugdämpfern.

Im Rahmen einer bedarfsgerechten Wartung von Fahrzeugen, insbesondere Kraftfahrzeugen ist es nötig, jederzeit über Informationen über den Verschleißzustand relevanter Fahrzeugkomponenten zu verfügen. Insbesondere betrifft dies den Verschleißzustand von Fahrzeugdämpfern.

Abhängig von der Dämpferbauart (beispielsweise Einrohrgasdruck- und Zweirohrdämpfer) treten verschiedene Schadensbilder auf, wie etwa Lochfraß an der Kolbenstange, Verschleiß an der Kolbenstange oder Undichtigkeiten in der Trennkolbendichtung, die sich durch einen Abfall der Dämpfkraft bemerkbar machen. Die Dämpfwirkung läßt nach und die Aufbau- und Radschwingungen in Vertikalrichtung werden weniger gedämpft.

Bei bekannten Verfahren zur Dämpferschadenserkennung wird der Dämpfer entweder in eingebautem Zustand auf einem Prüfstand untersucht (z. B. Boge-Shocktester) oder in ausgebautem Zustand auf einer Prüfmaschine (z. B. VDA-Prüfmaschine) analysiert. Diese bekannten Dämpferschadenserkennungsverfahren sind mit dem Nachteil verbunden, daß keine Aussagen über die Dämpfereigenschaften im Fahrbetrieb gewonnen werden können. Vielmehr ist eine zeitaufwendige und kostenintensive Überprüfung auf einem speziellen Prüfstand erforderlich und gegebenenfalls muß der Dämpfer vor der Überprüfung sogar ausgebaut werden.

Der Erfindung liegt die Aufgabe zugrunde, ein Verfahren und eine Vorrichtung zur Dämpferschadenserkennung bereitzustellen, die eine Analyse des Dämpferzustandes im Fahrbetrieb ermöglichen. Diese Aufgabe wird mit einem Verfahren gemäß Anspruch 1 und einer Vorrichtung gemäß Anspruch 19 gelöst.

Bei der Lösung geht die Erfindung von dem Grundgedanken aus, zum Erkennen von Dämpferschäden das Signal eines Antiblockiersystem-(ABS)-Raddrehzahlsensors zu verwenden. Erfindungsgemäß wird durch Auswertung des ABS-Raddrehzahlsignals im Frequenzbereich auf den Dämpferzustand rückgeschlossen.

Gemäß einer ersten Ausführungsform wird zum Erkennen von Dämpferschäden die Drehgeschwindigkeitsänderung $\Delta n$ der Felge (hochpaßgefiltertes ABS-Signal) verwendet.

Alternativ wird aus dem von dem ABS-Raddrehzahlsensor gelieferten Drehzahlsignal gemäß folgender Gleichung die Radiusänderung $\Delta r$ des Reifens berechnet:

$$\Delta r = \frac{v}{n} - r_0 \qquad (1)$$

mit:

v:     Fahrzeuglängsgeschwindigkeit [m/s], falls Schlupf $\approx 0$; (vorzugsweise gemittelt aus 4 Raddrehgeschwindigkeitssignalen)

n:     Drehgeschwindigkeit Felge [rad/s] (ABS-Signal, Eingangsgröße)

$r_0$:     statischer Reifenhalbmesser [m]

Aus diesem Zeitsignal für die Radiusänderung $\Delta r$ des Reifens bzw. die Drehgeschwindigkeitsänderung $\Delta n$ der Felge wird dessen Autoleistungsdichtespektrum $\Phi_{\Delta r}$ bzw. $\Phi_{\Delta n}$ berechnet. Die Berechnung des Autoleistungsdichtespektrums aus dem Zeitsignal der Radiusänderung des Reifens hat den Vorteil, daß für die Berechnung eine von der Fahrgeschwindigkeit unabhängige Größe verwendet wird.

Der Zusammenhang zwischen der auf das Rad und damit den Dämpfer wirkenden Fahrbahnunebenheit h und der Drehgeschwindigkeitsänderung der Felge bzw. der Radiusänderung des Reifens läßt sich systemtheoretisch mittels einer Frequenzgangfunktion $G_{\Delta n}$ bzw. $G_{\Delta r}$ darstellen. In diese Frequenzgangfunktion $G_{\Delta n}$ bzw. $G_{\Delta r}$ fließt auch der Zustand des Dämpfers ein.

Für die Anregungsfunktion h (d.h. die Straßenunebenheit) ist das Autoleistungsdichtespektrum durch folgende Gleichung gegeben:

$$\Phi_h(\omega) = \Phi_h(\Omega_0) \cdot v^{w-1} \cdot \Omega_0^{\,w} \cdot \omega^{-w} \qquad (2)$$

mit:

$\Phi_h(\Omega_0)$:     Unebenheitsmaß (hängt von der Fahrbahnbauart ab, z. B. Zementboden, Asphalt, Kopfsteinpflaster etc.) $[m^3]$

v:     Fahrzeuglängsgeschwindigkeit [m/s]

w:        Welligkeit [-], ($\approx 2$)

$\Omega_0^w$:       Bezugswellenlänge [m$^{-w}$]

$\omega$:        Zeitkreisfrequenz [rad/s]

(Diesbezüglich wird verwiesen auf Mitschke, M.: Dynamik der Kraftfahrzeuge, Band B: Schwingungen, 2. Auflage, Springer-Verlag, Berlin, 1984).

Im Rahmen der Erfindung hat sich herausgestellt, daß es im Autoleistungsdichtespektrum der mittels des ABS-Raddrehzahlsensors ermittelten Drehgeschwindigkeit der Felge bzw. die berechnete Radiusänderung des Reifens Bereiche gibt, die vom Dämpfungsparameter d abhängen und Bereiche, die vom Dämpfungsparameter d im wesentlichen unabhängig sind. Der Dämpfungsparameter d charakterisiert die erzeugt Dämpfkraft in Bezug auf die Relativgeschwindigkeit des Dämpfers. Letztere stellen im Autoleistungsdichtespektrum erfindungsgemäß einen Referenzfrequenzbereich dar, der vorzugsweise Frequenzen $\omega_{2,i}$ im Intervall 19 bis 22 Hz oder von etwa 30 bis 33 Hz aufweist. Die von den Dämpfungsparametern abhängigen Bereiche stellen erfindungsgemäß im Autoleistungsdichtespektrum einen Auswertefrequenzbereich dar, der vorzugsweise Frequenzen $\omega_{1,i}$ im Intervall von etwa 12 bis 15 Hz aufweist.

Für das Autoleistungsdichtespektrum der Radiusänderung des Reifens $\Phi_{\Delta r}(\omega_{1,i}, d)$ bzw. der Drehgeschwindigkeitsänderung der Felge $\Phi_{\Delta n}(\omega_{1,i}, d)$ im Auswertefrequenzbereich bzw. im Auswerteintervall gilt somit erfindungsgemäß:

$$\Phi_{\Delta r}(\omega_{1,i}, d) = |\Phi_{\Delta r}(\omega_{1,i}, d)|^2 \cdot \Phi_h(\omega_{1,i}) \qquad (3a)$$

bzw.

$$\Phi_{\Delta n}(\omega_{1,i}, d) = |G_{\Delta n}(\omega_{1,i}, d)|^2 \cdot \Phi_h(\omega_{1,i}) \qquad (3b).$$

Für das Autoleistungsdichtespektrum der Radiusänderung des Reifens bzw. der Drehgeschwindigkeitsänderung der Felge im Referenzfrequenzbereich bzw. im Referenzintervall gilt erfindungsgemäß:

$$\Phi_{\Delta r}(\omega_{2,i}) = |G_{\Delta r}(\omega_{2,i})|^2 \cdot \Phi_h(\omega_{2,i}) \qquad (4a)$$

bzw.

$$\Phi_{\Delta n}(\omega_{2,i}) = |G_{\Delta n}(\omega_{2,i})|^2 \cdot \Phi_h(\omega_{2,i}) \qquad (4b).$$

Durch Bildung eines Quotienten aus den Beziehungen (3a) und (4a) bzw. (3b) und (4b) ergeben sich folgende Beziehungen:

$$\text{DSKW}_{\Delta r} = \sum_{i=1}^{k} \frac{|G_{\Delta r}(\omega_{1,i}, d)|^2}{|G_{\Delta r}(\omega_{2,i})|^2} = \sum_{i=1}^{k} \frac{\Phi_{\Delta r}(\omega_{1,i}, d)}{\Phi_{\Delta r}(\omega_{2,i})} \cdot \left(\frac{\omega_{1,i}}{\omega_{2,i}}\right)^w \qquad (5a) \text{ bzw.}$$

$$\text{DSKW}_{\Delta n} = \sum_{i=1}^{k} \frac{|G_{\Delta n}(\omega_{1,i}, d)|^2}{|G_{\Delta n}(\omega_{2,i})|^2} = \sum_{i=1}^{k} \frac{\Phi_{\Delta n}(\omega_{1,i}, d)}{\Phi_{\Delta n}(\omega_{2,i})} \cdot \left(\frac{\omega_{1,i}}{\omega_{2,i}}\right)^w \qquad (5b)$$

mit w vorzugsweise etwa 2.

Dieser Quotient DSKW$_{\Delta r}$ bzw. DSKW$_{\Delta n}$ entspricht erfindungsgemäß einem Dämpferschadenskennwert. Dieser Dämpferschadenskennwert verändert sich, wenn sich der Dämpfungsparameter d ändert, d. h. der Stoßdämpfer schlechter wird, da dies die Frequenzgangfunktion G$_{\Delta n}$ bzw. G$_{\Delta r}$ verändert bzw. beeinflußt. Dies erlaubt einen Rückschluß auf den (Stoß-)Dämpferzustand. Vorzugsweise wird das dem Dämpferschadenskennwert DSKW$_{\Delta r}$ bzw. DSKW$_{\Delta n}$ entsprechende Signal tiefpaßgefiltert, um eine Glättung zu erhalten.

Das Drehgeschwindigkeitssignal der Felge bzw. die berechnete Radiusänderung des Reifens enthält zum einen das interessierende Nutzsignal (mit den erkennbaren Resonanzfrequenzen von Aufbau und Felge bzw. Reifen sowie der Resonanzfrequenz der Drehgeschwindigkeit von Felge und Gürtel) und zum anderen ein für die Auswertung im Frequenzbereich störendes Signal in Form eines Gleichanteils und einer Drift im Signal. Der Gleichanteil hängt von der momentanen Fahrgeschwindigkeit ab. Die Drift wird durch eine Beschleunigung oder Verzögerung des Fahrzeugs hervorgerufen. Diese Störeffekte können vorzugsweise durch eine Hochpaßfilterung des Drehgeschwindigkeitssignals insbesondere des ABS-Raddrehzahlsignals, vorzugsweise mit einer Eckfrequenz von 1 Hz eliminiert werden.

In der beschriebenen erfindungsgemäßen Ausführungsform ist die Berechnung des Dämpferschadenskennwertes DSKW$_{\Delta r}$ bzw. DSKW$_{\Delta n}$ von dem Parameter w (Welligkeit) abhängig. Dieser Wert wird vorzugsweise gleich 2 gesetzt. In der folgenden zweiten erfindungsgemäßen Ausführungsform wird eine Berechnung des Dämpferschadenskennwertes vorgeschlagen, die von der Welligkeit, d.h. von der Fahrbahnoberfläche unabhängig ist.

Grundgedanke hierbei ist die Einführung eines zweiten Referenzintervalles mit den Frequenzwerten $\omega_{3,i}$ vorzugsweise im Bereich 30 bis 33 Hz, wobei das erste Referenzintervall $\omega_{2,i}$ hierbei vorzugsweise im Bereich 19 bis 22 Hz liegt.

Für das Autoleistungsdichtespektrum der Radiusänderung des Reifens bzw. der Drehgeschwindigkeitsänderung der Felge in einem Referenzfrequenzbereich 2 bzw. im Referenzintervall 2 gilt:

$$\Phi_{\Delta r}(\omega_{3,i}) = |G_{\Delta r}(\omega_{3,i})|^2 \cdot \Phi_h(\omega_{3,i}) \tag{6a}$$

bzw.

$$\Phi_{\Delta n}(\omega_{3,i}) = |G_{\Delta n}(\omega_{3,i})|^2 \cdot \Phi_h(\omega_{3,i}) \tag{6b}.$$

Ausgehend von den obigen Gleichungen (2), (3) und (4) lässt sich nun ein neuer Schadenskennwert DSKW'$_{\Delta r}$ bzw. DSKW'$_{\Delta n}$ definieren.

$$\text{DSKW'}_{\Delta r} = \sum_{i=1}^{k}\left(\frac{\left|\dfrac{G_{\Delta r}(\omega_{1,i},d)}{G_{\Delta r}(\omega_{2,i})}\right|^2}{\left|\dfrac{G_{\Delta r}(\omega_{2,i})}{G_{\Delta r}(\omega_{3,i})}\right|^2}\right) = \sum_{i=1}^{k}\left(\frac{\dfrac{\Phi_{\Delta r}(\omega_{1,i},d)}{\Phi_{\Delta r}(\omega_{2,i})}\cdot\left(\dfrac{\omega_{1,i}}{\omega_{2,i}}\right)^w}{\dfrac{\Phi_{\Delta r}(\omega_{2,i})}{\Phi_{\Delta r}(\omega_{3,i})}\cdot\left(\dfrac{\omega_{2,i}}{\omega_{3,i}}\right)^w}\right) \tag{7a}$$

$$\text{DSKW'}_{\Delta n} = \sum_{i=1}^{k}\left(\frac{\left|\dfrac{G_{\Delta n}(\omega_{1,i},d)}{G_{\Delta n}(\omega_{2,i})}\right|^2}{\left|\dfrac{G_{\Delta n}(\omega_{2,i})}{G_{\Delta n}(\omega_{3,i})}\right|^2}\right) = \sum_{i=1}^{k}\left(\frac{\dfrac{\Phi_{\Delta n}(\omega_{1,i},d)}{\Phi_{\Delta n}(\omega_{2,i})}\cdot\left(\dfrac{\omega_{1,i}}{\omega_{2,i}}\right)^w}{\dfrac{\Phi_{\Delta n}(\omega_{2,i})}{\Phi_{\Delta n}(\omega_{3,i})}\cdot\left(\dfrac{\omega_{2,i}}{\omega_{3,i}}\right)^w}\right) \tag{7b}$$

Hierbei sind:

$G_x(\omega_{1,i},d)$:        Frequenzgangfunktion, Auswerteintervall, Mittenfrequenz $\omega_1$, Teilfrequenzen $\omega_{1,i}$ liegen innerhalb Auswerteintervall

$G_x(\omega_{2,i})$:      Frequenzgangfunktion, Referenzintervall 1, Mittenfrequenz $\omega_2$ Teilfrequenzen $\omega_{2,i}$ liegen innerhalb Referenzintervall 1

$G_x(\omega_{3,i})$:      Frequenzgangfunktion, Referenzintervall 2, Mittenfrequenz $\omega_3$ Teilfrequenzen $\omega_{3,i}$ liegen innerhalb Referenzintervall 2

$\Phi_x(\omega_{1,i},d)$:      Autoleistungsdichtespektrum Radiusänderung bzw. Drehzahl, Auswerteintervall, Mittenfrequenz $\omega_1$

$\Phi_x(\omega_{2,i})$:      Autoleistungsdichtespektrum Radiusänderung bzw. Drehzahl, Referenzintervall 1, Mittenfrequenz $\omega_2$

$\Phi_x(\omega_{3,i})$:      Autoleistungsdichtespektrum Radiusänderung bzw. Drehzahl, Referenzintervall 2, Mittenfrequenz $\omega_3$

$\omega_{1,i}$:      Kreisfrequenz $(2 \cdot \pi \cdot f)$ Auswerteintervall

$\omega_{2,i}$:      Kreisfrequenz $(2 \cdot \pi \cdot f)$ Referenzintervall 1

$\omega_{3,i}$:      Kreisfrequenz $(2 \cdot \pi \cdot f)$ Referenzintervall 2

w:      Welligkeit Fahrbahn

Wählt man nun die Breiten der drei Intervalle klein, und die Mittenfrequenzen $\omega_1$, $\omega_2$, und $\omega_3$ so, dass gilt,

$$\left(\frac{\omega_{1,i}}{\omega_{2,i}}\right) \approx \left(\frac{\omega_{2,i}}{\omega_{3,i}}\right) \cdot \text{mit } i = 1...k$$

$$\left(\frac{\omega_{1,i}}{\omega_{2,1}}\right) \approx \left(\frac{\omega 2,i}{\omega 3,i}\right) \cdot \text{mit } i=1...k$$

so erhält man einen Schadenskennwert DSKW'$_{\Delta r}$ bzw. DSKW'$_{\Delta n}$, der unabhängig von der Welligkeit w ist.
Man erhält für diesen Schadenskennwert:

$$\text{DSKW'}_{\Delta r} = \sum_{i=1}^{k} \left( \frac{\left|\dfrac{G_{\Delta r}(\omega_{1,i},d)}{G_{\Delta r}(\omega_{2,i})}\right|^2}{\left|\dfrac{G_{\Delta r}(\omega_{2,i})}{G_{\Delta r}(\omega_{3,i})}\right|^2} \right) = \sum_{i=1}^{k} \left( \frac{\dfrac{\Phi_{\Delta r}(\omega_{1,i},d)}{\Phi_{\Delta r}(\omega_{2,i})}}{\dfrac{\Phi_{\Delta r}(\omega_{2,i})}{\Phi_{\Delta r}(\omega_{3,i})}} \right) \qquad (8a)$$

bzw.

$$\text{DSKW'}_{\Delta n} = \sum_{i=1}^{k} \left( \frac{\left|\dfrac{G_{\Delta n}(\omega_{1,i},d)}{G_{\Delta n}(\omega_{2,i})}\right|^2}{\left|\dfrac{G_{\Delta n}(\omega_{2,i})}{G_{\Delta n}(\omega_{3,i})}\right|^2} \right) = \sum_{i=1}^{k} \left( \frac{\dfrac{\Phi_{\Delta n}(\omega_{1,i},d)}{\Phi_{\Delta n}(\omega_{2,i})}}{\dfrac{\Phi_{\Delta n}(\omega_{2,i})}{\Phi_{\Delta n}(\omega_{3,i})}} \right) \qquad (8b)$$

Aus den Gleichungen (5a), (5b), (8a), (8b) ist ersichtlich, dass eine Überprüfung erfolgen muß, ob der jeweilige Ausdruck im Nenner eine festzulegende Schwelle überschreitet, damit keine Division durch Null bzw. eine Zahl nahe Null auftritt. Unterschreitet der Nennerausdruck diese Schwelle, so wird die Berechnung nicht durchgeführt.

Fig. 11 zeigt die Nomenklatur für die Frequenzwerte $\omega_{x,i}$, wobei x = 1, 2 oder 3 ist, in dem Auswerte- bzw. Referenzbereich auf der Frequenzachse.

Ausgehend von Gleichung (5a) bzw. Gleichung (5b) ist ersichtlich, dass für den Dämpferschadenkennwert $DSKW_{\Delta r}$ bzw. $DSKW_{\Delta n}$ ein Quotient aus zwei Autoleistungsdichte-Werten berechnet wird. Da die Autoleistungsdichte ein Maß für den Energieinhalt eines Signals für ein bestimmtes Frequenzintervall ist, kann erfindungsgemäß mit Hilfe einer geeigneten Schaltung von Filtern ein dem $DSKW_{\Delta r}$, $DSKW_{\Delta n}$ bzw. $DSKW'_{\Delta r}$, $DSKW'_{n}$ ähnlicher Schadenskennwert $DSKW_{\Delta r,F}$ ,$DSKW_{\Delta n,F}$ bzw. $DSKW'_{\Delta r,F}$, $DSKW'_{\Delta n,F}$ definiert werden.

Der Schadenskennwert $DSKW_{\Delta r,F}$ bzw. $DSKW_{\Delta n,F}$ geht von Gleichung (5a) bzw. Gleichung (5b) aus.

Die Definition für das Autoleistungsdichtespektrum ist in Gleichung (A) gegeben.

$$\Phi_x(\omega) = \lim_{T \to \infty} \frac{|X(j\omega)|^2}{2T} \qquad\qquad (A)$$

Hieraus ist ersichtlich, dass das Autoleistungsdichtespektrum einer Größe x gleich dem quadrierten Amplitudenspektrum $X(j\omega)$, geteilt durch die zweifache Beobachtungszeit T ist.

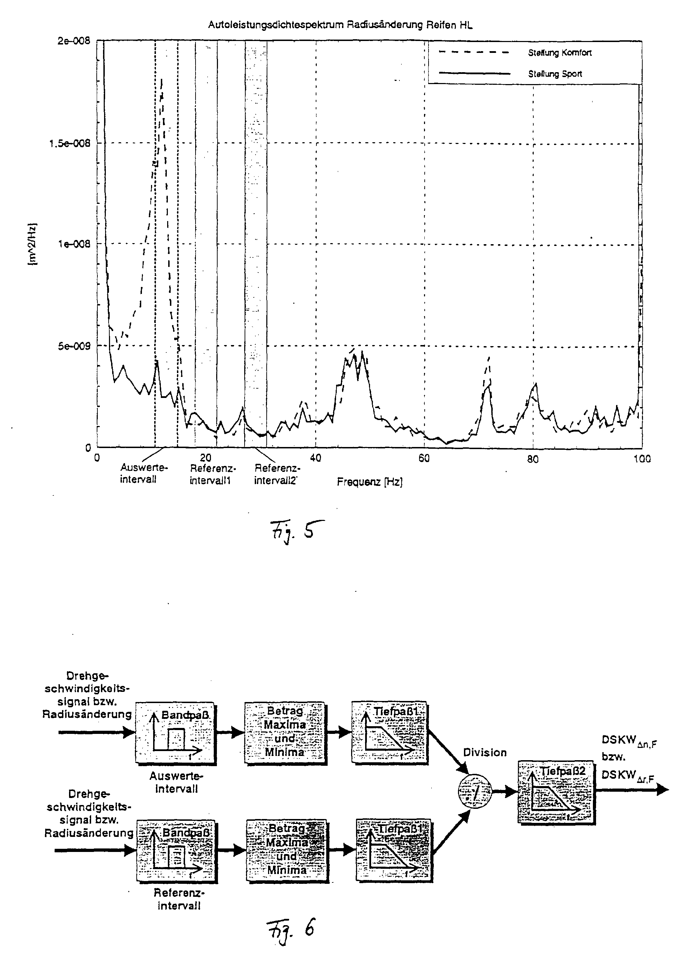

Die Amplitude eines Signals in einem bestimmten Frequenzbereich lässt sich durch eine Filterung mit einem eng begrenzten Bandpass und einer anschließenden Betragsbildung der ermittelten Maxima und Minima ermitteln. Die Amplitude des Zeitsignals entspricht näherungsweise dem Wert im Amplitudenspektrum für den entsprechenden Frequenzbereich. Da das Autoleistungsdichtespektrum für eine Zeitspanne T ermittelt wird, erfolgt mit einem ersten Tiefpaß eine Filterung (Mittelung über Zeitspanne). Dieser schließt sich eine Quotientenbildung an, um nach einer weiteren Filterung mit einem zweiten Tiefpaß (um einen langfristigen Trend zu ermitteln) den $DSKW_{\Delta r,F}$ bzw. $DSKW_{\Delta n,F}$ zu erhalten (vgl. Fig. 6).

Da der DSKW ein relativer Schadenskennwert ist, kann in der Berechnung auf die Quadrierung des angenäherten Amplitudenspektrums $X(j\omega)$ und die Grenzwertbildung $T \to \infty$ verzichtet werden. Darüber hinaus kann, falls eine konstante Welligkeit w (vorzugsweise = 2) angenommen wird, der rechte Klammerausdruck in Gleichung (5) weggelassen werden (dieser bewirkt lediglich eine Skalierung von $DSKW_{\Delta r}$ bzw. $DSKW_{\Delta n}$). Die beschriebene Struktur für einen Dämpferschadenskennwert $DSKW_{\Delta r,F}$ bzw. $DSKW_{\Delta n,F}$ ist in Fig. 6 dargestellt.

Die Erfindung wird im folgenden anhand der beigefügten Zeichnungen näher erläutert. Es zeigen:

Fig. 1    das Autoleistungsdichtespektrum der Radiusänderung für einen Vorderreifen, links;

Fig. 2    das Autoleistungsdichtespektrum der Radiusänderung eines Hinterreifens, links;

Fig. 3    den zeitlichen Verlauf des Dämpferschadenskennwertes für einen Vorderreifen, links, für verschiedene Dämpferstufen;

Fig. 4    den zeitlichen Verlauf des Dämpferschadenskennwertes für einen Hinterreifen, links, für verschiedene Dämpferstufen;

Fig. 5    die Lage des Auswerteintervalls, des ersten Referenzintervalls und des zweiten Referenzintervalls im Autoleistungsdichtespektrum der Radiusänderung für einen Hinterreifen, links;

Fig. 6    Struktur zur Berechnung des $DSKW_{\Delta n,F}$ bzw. $DSKW_{\Delta r,F}$;

Fig. 7    $DSKW_{\Delta n,F}$-Verlauf der Räder vorne links und hinten links für die Dämpfer-Stellungen "Sport" und "Komfort", Autobahn;

Fig. 8    Struktur zur Berechnung des $DSKW'_{\Delta r,F}$ bzw $DSKW'_{\Delta n,F}$;

Fig. 9    die Auswertelogik für die Auswertung der Dämpferschadenskennwerte $DSKW^x_{x,x}$;

Fig. 10    die Schwellwertabfrage zur Schadensdetektion, und

Fig. 11    die Nomenklatur für die Frequenzwerte $\omega_{x,i}$.

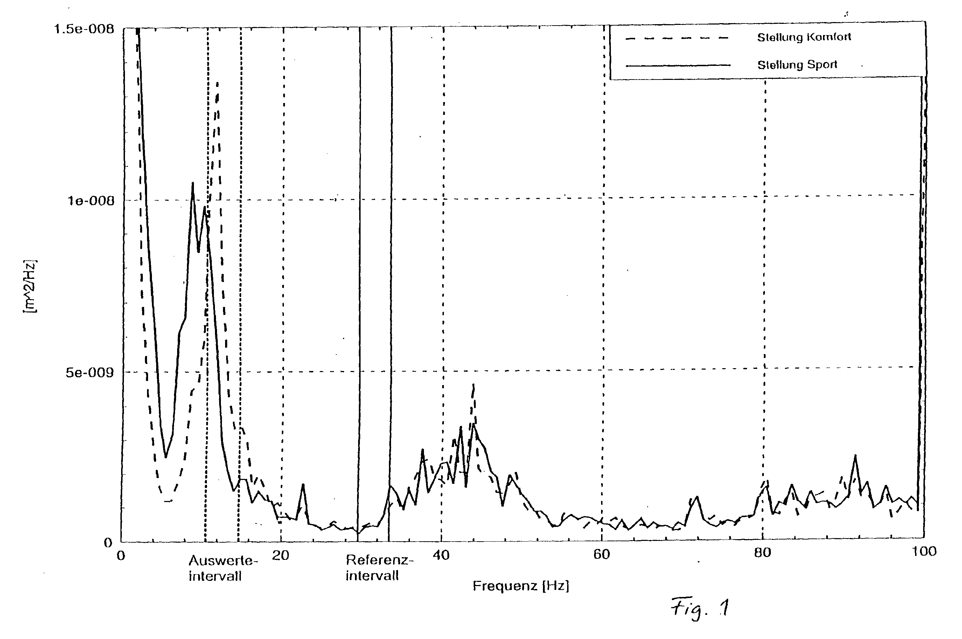

Die in den Figuren 1 bis 4 dargestellten Autoleistungsdichtespektren bzw. Dämpferschadenskennwerte stellen Ergebnisse von Testfahrten auf dem BMW Testgelände mit einem BMW 740iA mit verschieden hohen Dämpfkräften (Parameter d in den vorhergehenden Gleichungen) dar. Hierbei wurden die Einstellungen "Sport" (hohe Dämpfung) und "Komfort" (niedrige Dämpfung) verwendet.

Als Eingangsdaten für die erfindungsgemäße Dämpferschadenserkennung wurden die Kehrwerte der Drehgeschwindigkeiten der Felge n aus dem ABS-Sensorsignal aufgezeichnet. Daraus wurde gemäß Gleichung (1) der zeitliche Verlauf der Radiusänderung $\Delta r$ ermittelt.

Als Auswerteintervall für die Ermittlung des Terms $\Phi_{\Delta r}(\omega_{1,i},d)$ in Gleichung (5a) wurde im Autoleistungsdichtespektrum der Bereich [12; 15] Hz, als Referenzintervall für die Ermittlung des Terms $\Phi_{\Delta r}(\omega_{2,i})$ der Bereich [30; 33] Hz festgelegt. Die für diese Frequenzen ermittelten Quotienten wurden gemäß Gleichung (5a) aufaddiert und tiefpaßgefiltert ausgegeben.

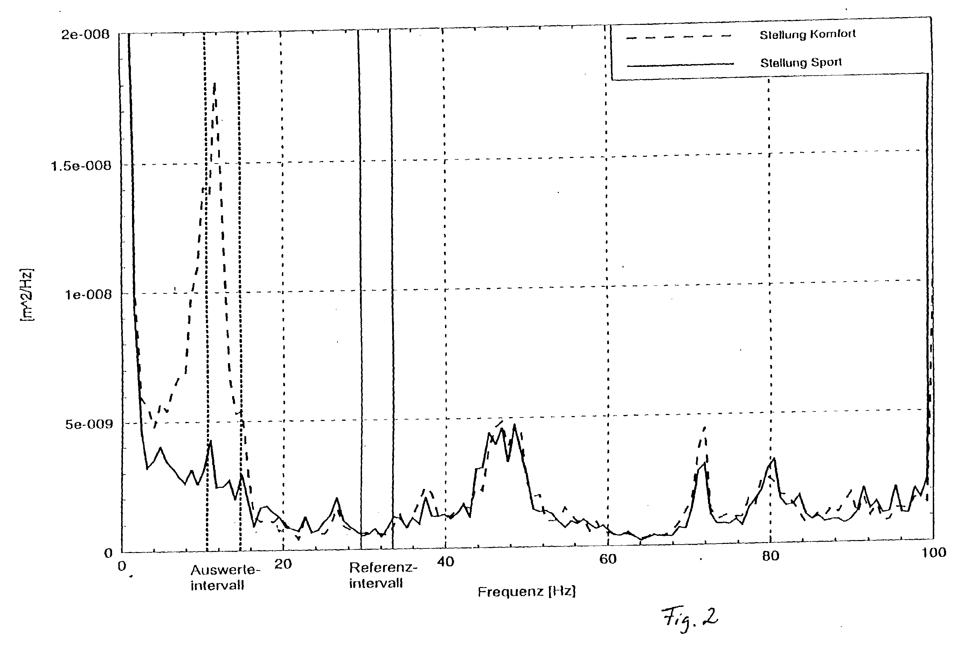

Die Autoleistungsdichtespektren der Radiusänderung $\Phi_{\Delta r}$ des linken Vorderrades und des linken Hinterrades der für die Dämpferschadenskennwert-Berechnung verwendeten Daten sind in den Figuren 1 und 2 dargestellt. Im Bereich des Auswerteintervalls [12; 15] Hz ist deutlich der Einfluß des Dämpferzustandes (hier "Komfort" oder "Sport") auf den Verlauf des Autoleistungsdichtespektrums zu erkennen, im Bereich des Referenzintervalls [30; 33] Hz ist eine solche Abhängigkeit nicht zu erkennen. Dies bedeutet, daß das Autoleistungsdichtespektrum der Radiusänderung zur Beurteilung des Dämpferzustandes geeignet ist.

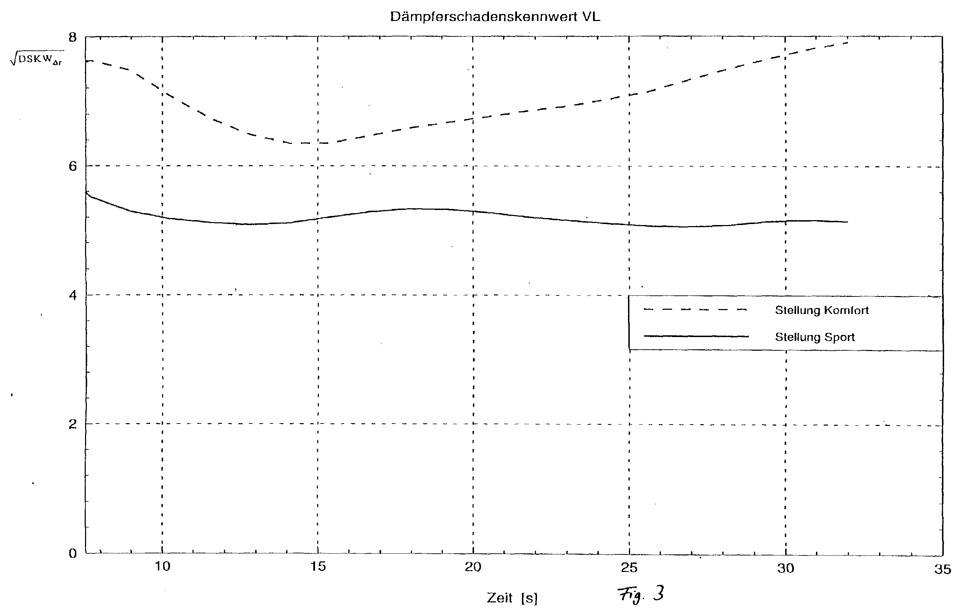

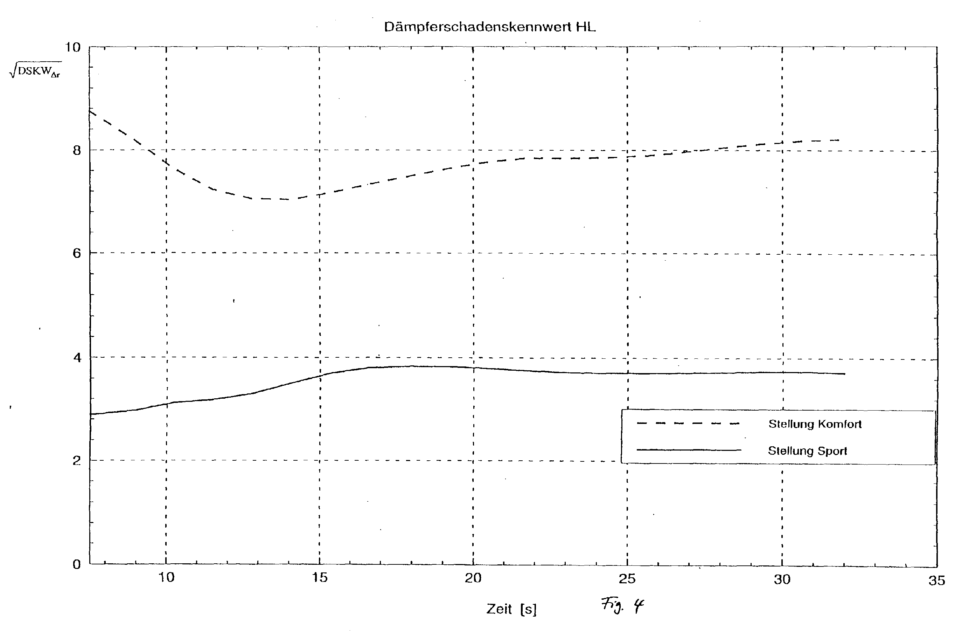

Basierend auf den gezeigten Autoleistungsdichtespektren für die Radiusänderung ergeben sich die in den Figuren 3 und 4 gezeigten Verläufe des Dämpferschadenskennwertes für das linke Vorderrad bzw. das linke Hinterrad abhängig von der Dämpferstufe (d.h. simulierter Dämpferzustand) "Sport" bzw. "Komfort". Die zeitlichen Verläufe der Dämpferschadenskennwerte entsprechen einer konstanten Geschwindigkeit von 80 km/h und einem gleichen Strekkenprofil. Ein Vergleich der Figuren 3 und 4 zeigt, daß an der Hinterachse der Unterschied im Dämpferschadenskennwert in Abhängigkeit von der gewählten Dämpferstufe noch ausgeprägter ist.

Mit dem erfindungsgemäßen Verfahren bzw. der erfindungsgemäßen Vorrichtung sind verschiedene Vorteile verbunden. Zur Dämpferschadenserkennung ist erfindungsgemäß keine zusätzliche Sensorik notwendig, so daß eine kostengünstige Lösung durch Integration in ein vorhandenes Steuergerät bereitgestellt wird. Erfindungsgemäß ist die Analyse des Dämpferzustandes im Fahrbetrieb möglich. Ferner kann eine bedarfsgerechte Wartung der Stoßdämpfer verwirklicht werden. Beispielsweise können die Dämpferzustandsdaten der jeweiligen Überwachungsorganisation (z. B. TÜV) bei einer Hauptuntersuchung zur Verfügung gestellt werden, so daß dem Fahrzeughalter keine zusätzlichen Kosten für eine evtl. in Zukunft geplante Stoßdämpferüberprüfung entstehen.

Unter Verwendung der in Fig. 6 dargestellten Struktur wurden auf dem BMW Messegelände mit einem BMW 740iA Messungen durchgeführt. Unterschiedliche Dämpferkräfte wurden durch Wahl der Dämpferstellung ("Sport" entspricht hoher Dämpfung und "Komfort" entspricht niedriger Dämpfung) eingestellt.

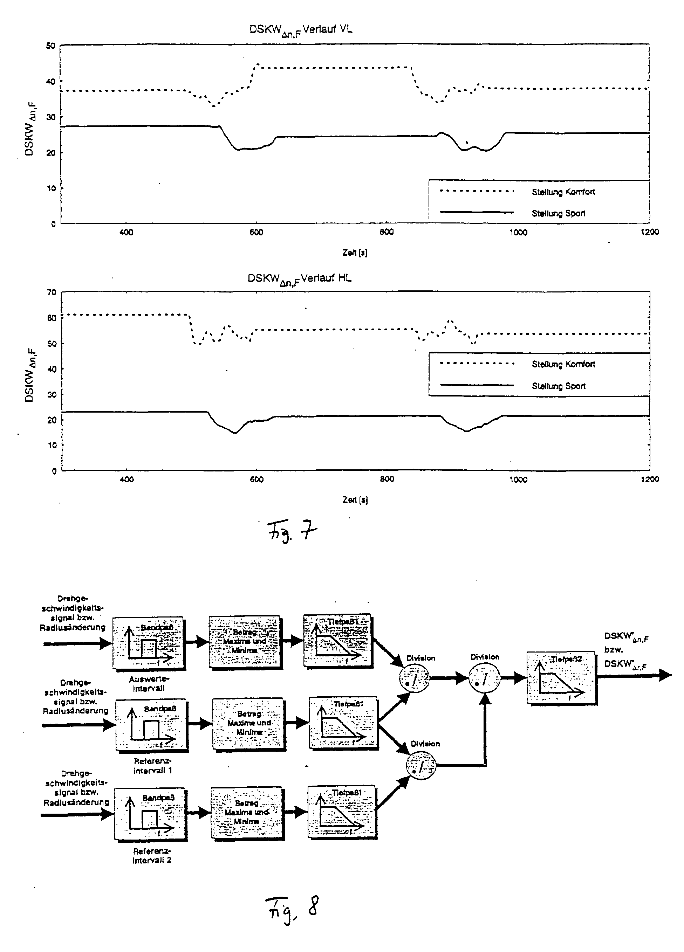

Die zugehörigen $DSKW_{\Delta n,F}$ -Verläufe sind in Fig. 7 dargestellt. Das obere Diagramm zeigt den $DSKW_{\Delta n,F}$-Verlauf für das linke Vorderrad, während das untere Diagramm von Fig. 7 den Verlauf für das linke Hinterrad zeigt, jeweils wieder für die Dämperstellungen "Sport" und "Komfort". In Teilbereichen ist der Algorithmus ausgeblendet, wie oben beschrieben. Die Darstellung zeigt, daß der $DSKW_{\Delta n,F}$ bzw. $DSKW_{\Delta r,F}$ geeignet ist, einen Rückschluß auf den Dämpferzustand zu ziehen.

Der genannte Schadenskennwert $DSKW'_{\Delta r,F}$ bzw. $DSKW'_{\Delta n,F}$ beruht auf Gleichung (8a) bzw. Gleichung (8b). Fig. 8 zeigt hierzu eine vereinfachte Struktur wie diese Schadenskennwerte erfindungsgemäß ermittelt werden. Das Signal der Drehgeschwindigkeitsänderung bzw. der Radiusänderung wird zunächst mit einem entsprechenden Bandpaß für das Auswerteintervall bzw. das erste und das zweite Referenzintervall gefiltert. Anschließend erfolgt eine Betragsbildung der ermittelten Maxima und Minima. Daraufhin erfolgt mit einem ersten Tiefpaß eine Filterung. An diese Filterung schließt sich eine Quotientenbildung gemäß Gleichungen 8a und 8b an. Abschließend erfolgt eine weitere Filterung mit einem zweiten Tiefpaß.

Auch mit diesem Algorithmus wurden Messungen mit einem BMW 740iA auf dem BMW Meßgelände durchgeführt. Unterschiedliche Dämpferkräfte wurden analog zum oben erläuterten Vorgehen durch die zwei Dämpferstufen "Sport" (hohe Dämpfkräfte) und "Komfort" (niedrige Dämpfkräfte) eingestellt. Die Verläufe sind qualitativ die gleichen wie in Fig. 7 dargestellt.

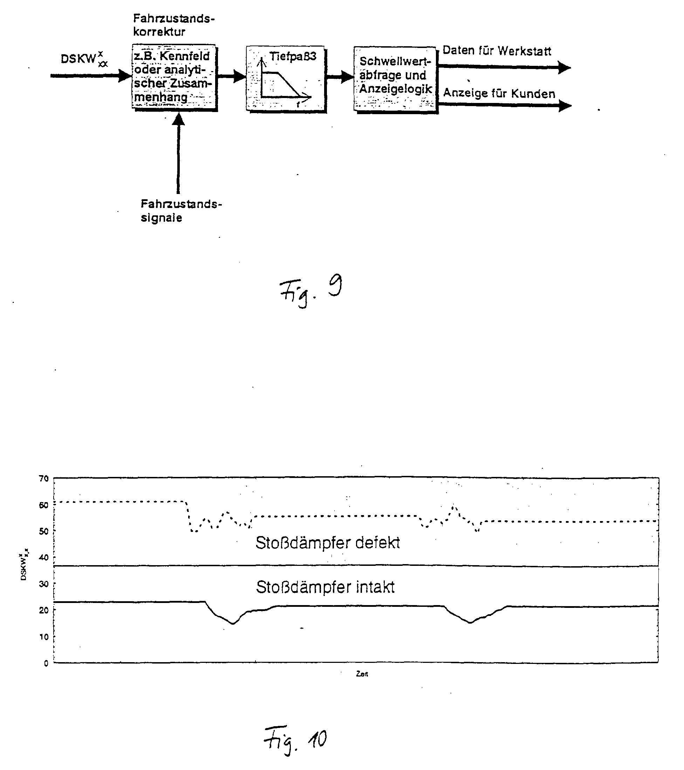

Eine weitere zusätzliche Verarbeitung des $DSKW^{x}_{x,x}$ ist in Fig. 9 dargestellt. Der $DSKW^{x}_{x,x}$ kann hierbei beispielsweise über einen funktionalen bzw. analytischen Zusammenhang oder aber einen experimentell ermittelten Zusammenhang (z.B. Kennfeld) hinsichtlich der Fahrgeschwindigkeit korrigiert werden. Neben der Fahrgeschwindigkeit sind hier auch Korrekturen mit Hilfe des Drosselklappenwinkels, des Moments, der Gangstufe, der Motordrehzahl und des Betriebszustandes der Wandlerkupplung (bei Fahrzeugen mit Automatikgetriebe) bzw. des Kupplungsschalters (bei Fahrzeugen mit Schaltgetriebe) vorteilhaft. Durch Wahl der Eckfrequenz des Filters "Tiefpaß 3" kann eine langfristige Mittelung des Dämpferschadenskennwertes $DSKW^{x}_{x,x}$ erreicht werden (über die Lebensdauer des Dämpfers).

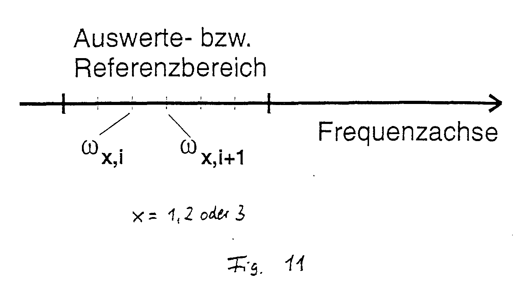

Durch Schwellwertabfrage kann dann ein Dämpferschaden detektiert werden. Sobald der unkorrigierte oder korrigierte $DSKW^{x}_{x,x}$ im Schadensbereich (grau hinterlegt, siehe Fig. 10) liegt, wird auf einen defekten Dämpfer geschlossen und diese Information weiterverarbeitet. Zum einen kann sofort die Information über einen Dämpferdefekt an die Werkstatt weitergegeben werden (Fehlerspeicher mit Auslesen in der Werkstatt oder aktive Werkstattbenachrichtigung), zum anderen dem Kunden in Form eines Anzeigekonzepts zugänglich gemacht werden.

**Patentansprüche**

1.  Verfahren zum Erkennen von Dämpferschäden, **gekennzeichnet durch** den Schritt:
    Ermitteln von Eigenschaften eines Dämpfers **durch** Auswerten eines Signals eines Antiblockiersystem-Raddrehzahlsensors.

**2.** Verfahren nach Anspruch 1, wobei der Ermittlungsschritt den Schritt aufweist:
Ermitteln des zeitlichen Verlaufs der Radiusänderung $\Delta r$ des Reifens oder Ermitteln des zeitlichen Verlaufs der Drehgeschwindigkeitsänderung. $\Delta n$ der Felge anhand des Signals des Antiblockiersystem-Raddrehzahlsensors.

**3.** Verfahren nach Anspruch 2, ferner mit dem Schritt:
Berechnen des Autoleistungsdichtespektrums $\Phi_{\Delta r}$ für das Zeitsignal der Radiusänderung $\Delta r$ des Reifens oder Berechnen des Autoleistungsdichtespektrums $\Phi_{\Delta n}$ für das Zeitsignal der Drehgeschwindigkeitsänderung $\Delta n$ der Felge.

**4.** Verfahren nach Anspruch 3, ferner mit dem Schritt:
Berechnen eines Quotienten $DSKW_{\Delta r}$ bzw. $DSKW_{\Delta n}$ aus dem Autoleistungsdichtespektrum $\Phi_{\Delta r}$ oder $\Phi_{\Delta n}$ für einen ersten Frequenzbereich und dem Autoleistungsdichtespektrum $\Phi_{\Delta r}$ oder $\Phi_{\Delta n}$ für einen zweiten Frequenzbereich, wobei der berechnete Quotient einem Dämpferschadenskennwert entspricht.

**5.** Verfahren nach Anspruch 4, wobei der Quotient $DSKW_{\Delta r}$ bzw. $DSKW_{\Delta n}$ gemäß einer der beiden Gleichungen berechnet wird:

$$DSKW_{\Delta r} = \sum_{i=1}^{k} \frac{\Phi_{\Delta r}(\omega_{1,i}, d)}{\Phi_{\Delta r}(\omega_{2,i})} \cdot \left( \frac{\omega_{1,i}}{\omega_{2,i}} \right)^w$$

$$DSKW_{\Delta n} = \sum_{i=1}^{k} \frac{\Phi_{\Delta n}(\omega_{1,i}, d)}{\Phi_{\Delta n}(\omega_{2,i})} \cdot \left( \frac{\omega_{1,i}}{\omega_{2,i}} \right)^w$$

mit

$\omega_{1,i}$:     diskrete Frequenzwerte des ersten Frequenzbereichs;
$\omega_{2,i}$:     diskrete Frequenzwerte des zweiten Frequenzbereichs;
w:     Welligkeit, vorzugsweise etwa 2; und
k:     Anzahl der diskreten Frequenzpunkte.

**6.** Verfahren nach Anspruch 4 oder 5, wobei der erste Frequenzbereich einem Auswerteintervall entspricht und der zweite Frequenzbereich einem Referenzintervall entspricht.

**7.** Verfahren nach Anspruch 4, 5 oder 6, wobei der zweite Frequenzbereich höhere Frequenzen als der erste Frequenzbereich aufweist.

**8.** Verfahren nach einem der Ansprüche 4 bis 7, wobei der erste Frequenzbereich Frequenzen $\omega_{1,i}$ von etwa 12 bis 15 Hz und/oder der zweite Frequenzbereich Frequenzen $\omega_{2,i}$ von etwa 19 bis 22 Hz oder etwa 30 bis 33 Hz aufweist.

**9.** Verfahren nach einem der Ansprüche 1 bis 8, ferner mit dem Schritt:
Hochpaßfiltern des Signals des Antiblockiersystem-Raddrehzahlsensors.

**10.** Verfahren nach Anspruch 3, ferner mit dem Schritt:
Berechnen eines Quotienten $DSKW'_{\Delta r}$ bzw. $DSKW'_{\Delta n}$ aus dem Quotienten des Autoleistungsdichtespektrums $\Phi_{\Delta r}$ oder $\Phi_{\Delta n}$ für einen ersten Frequenzbereich und des Autoleistungsdichtespektrums $\Phi_{\Delta r}$ oder $\Phi_{\Delta n}$ für einen zweiten Frequenzbereich und dem Quotienten des Autoleistungsdichtespektrums $\Phi_{\Delta r}$ oder $\Phi_{\Delta n}$ für den zweiten Frequenzbereich und des Autoleistungsdichtespektrums $\Phi_{\Delta r}$ oder $\Phi_{\Delta n}$ für den dritten Frequenzbereich, wobei der berech-

nete Quotient DSKW'$_{\Delta r}$ bzw. DSKW'$_{\Delta n}$ einem Dämpferschadenskennwert entspricht.

**11.** Verfahren nach Anspruch 10, wobei der Quotient DSKW'$_{\Delta r}$ bzw. DSKW'$_{\Delta n}$ gemäß einer der beiden Gleichungen berechnet wird:

$$\text{DSKW'}_{\Delta r} = \sum_{i=1}^{k}\left(\frac{\dfrac{\dot{\Phi}_{\Delta r}(\omega_{1,i},d)}{\Phi_{\Delta r}(\omega_{2,i})}}{\dfrac{\Phi_{\Delta r}(\omega_{2,i})}{\Phi_{\Delta r}(\omega_{3,i})}}\right)$$

$$\text{DSKW'}_{\Delta n} = \sum_{i=1}^{k}\left(\frac{\dfrac{\Phi_{\Delta n}(\omega_{1,i},d)}{\Phi_{\Delta n}(\omega_{2,i})}}{\dfrac{\Phi_{\Delta n}(\omega_{2,i})}{\Phi_{\Delta n}(\omega_{3,i})}}\right)$$

mit

$\omega_{1,i}$:    diskrete Frequenzwerte des ersten Frequenzbereichs;

$\omega_{2,i}$:    diskrete Frequenzwerte des zweiten Frequenzbereichs;

$\omega_{3,i}$:    diskrete Frequenzwerte des dritten Frequenzbereichs; und

k:    Anzahl der diskreten Frequenzpunkte.

**12.** Verfahren nach Anspruch 10 oder 11, wobei der erste Frequenzbereich einem Auswerteintervall, der zweite Frequenzbereich einem ersten Referenzintervall und der dritte Frequenzbereich einem zweiten Referenzintervall entspricht.

**13.** Verfahren nach Anspruch 10, 11 oder 12, wobei der zweite Frequenzbereich höhere Frequenzen als der erste Frequenzbereich und der dritte Frequenzbereich höhere Frequenzen als der zweite Frequenzbereich aufweisen.

**14.** Verfahren nach einem der Ansprüche 10 bis 13, wobei der erste Frequenzbereich Frequenzen $\omega_{1,i}$ von etwa 12 bis 15 Hz und/oder der zweite Frequenzbereich Frequenzen $\omega_{2,i}$ von etwa 19 bis 22 Hz und/oder der dritte Frequenzbereich Frequenzen $\omega_{3,i}$ von etwa 30 bis 33 Hz aufweist.

**15.** Verfahren nach einem der Ansprüche 4 bis 14, ferner mit dem Schritt:
Korrigieren des Dämpferschadenskennwertes anhand von mindestens einem Fahrzustandssignal.

**16.** Verfahren nach Anspruch 15, wobei das Fahrzustandssignal ausgewählt ist aus der Gruppe Fahrgeschwindigkeit, Drosselklappenwinkel, Drehmoment, Motordrehzahl, Gangstufe, Betriebszustand der Wandlerkupplung oder Stellung des Kupplungsschalters.

**17.** Verfahren nach einem der Ansprüche 4 bis 16, ferner mit dem Schritt:
Vergleichen des Dämpferschadenskennwertes mit einem Schwellwert.

**18.** Verfahren nach Anspruch 17, wobei ein Dämpferschaden vorliegt, wenn der Dämpferschadenskennwert den Schwellwert überschreitet.

**19.** Vorrichtung zum Erkennen von Dämpferschäden, **gekennzeichnet durch**:
eine Einrichtung zum Ermitteln von Eigenschaften eines Dämpfers **durch** Auswerten eines Signals eines Antiblok-

kiersystem-Raddrehzahlsensors.

20. Vorrichtung nach Anspruch 19, mit einer Einrichtung zum Ermitteln des zeitlichen Verlaufs der Radiusänderung $\Delta r$ des Reifens oder Ermitteln des zeitlichen Verlaufs der Drehgeschwindigkeitsänderung $\Delta n$ der Felge anhand des Signals des Antiblockiersystem-Raddrehzahlsensors.

21. Vorrichtung nach Anspruch 20, ferner mit einer Einrichtung zum Berechnen des Autoleistungsdichtespektrums $\Phi_{\Delta r}$ für das Zeitsignal der Radiusänderung $\Delta r$ des Reifens oder Berechnen des Autoleistungsdichtespektrums $\Phi_{\Delta n}$ für das Zeitsignal der Drehgeschwindigkeitsänderung $\Delta n$ der Felge.

22. Vorrichtung nach Anspruch 21, ferner mit einer Einrichtung zum Berechnen eines Quotienten $DSKW_{\Delta r}$ bzw. $DSKW_{\Delta n}$ aus dem Autoleistungsdichtespektrum $\Phi_{\Delta r}$ oder $\Phi_{\Delta n}$ für einen ersten Frequenzbereich und dem Autoleistungsdichtespektrum $\Phi_{\Delta r}$ oder $\Phi_{\Delta n}$ für einen zweiten Frequenzbereich, wobei der berechnete Quotient einem Dämpferschadenskennwert entspricht.

23. Vorrichtung nach Anspruch 22, wobei der Quotient $DSKW_{\Delta r}$ bzw. $DSKW_{\Delta n}$ gemäß einer der beiden Gleichungen berechnet wird:

$$DSKW_{\Delta r} = \sum_{i=1}^{k} \frac{\Phi_{\Delta r}(\omega_{1,i}, d)}{\Phi_{\Delta r}(\omega_{2,i})} \cdot \left( \frac{\omega_{1,i}}{\omega_{2,i}} \right)^{w}$$

$$DSKW_{\Delta n} = \sum_{i=1}^{k} \frac{\Phi_{\Delta n}(\omega_{1,i}, d)}{\Phi_{\Delta n}(\omega_{2,i})} \cdot \left( \frac{\omega_{1,i}}{\omega_{2,i}} \right)^{w}$$

mit

$\omega_{1,i}$:     diskrete Frequenzwerte des ersten Frequenzbereichs;
$\omega_{2,i}$:     diskrete Frequenzwerte des zweiten Frequenzbereichs;
w:     Welligkeit, vorzugsweise etwa 2; und
k:     Anzahl der diskreten Frequenzpunkte.

24. Vorrichtung nach Anspruch 21, ferner mit einer Einrichtung zum Berechnen eines Quotienten $DSKW'_{\Delta r}$ bzw. $DSKW'_{\Delta n}$ aus dem Quotienten des Autoleistungsdichtespektrums $\Phi_{\Delta r}$ bzw. $\Phi_{\Delta n}$ für einen ersten Frequenzbereich und des Autoleistungsdichtespektrums $\Phi_{\Delta r}$ bzw. $\Phi_{\Delta n}$ für einen zweiten Frequenzbereich und dem Quotienten des Autoleistungsdichtespektrums $\Phi_{\Delta r}$ bzw. $\Phi_{\Delta n}$ für den zweiten Frequenzbereich und des Autoleistungsdichtespektrums $\Phi_{\Delta r}$ bzw. $\Phi_{\Delta n}$ für einen dritten Frequenzbereich, wobei der berechnete Quotient $DSKW'_{\Delta r}$ bzw. $DSKW'_{\Delta n}$ einem Dämpferschadenskennwert entspricht.

25. Vorrichtung nach Anspruch 24, wobei der Quotient $DSKW'_{\Delta r}$ bzw. $DSKW'_{\Delta n}$ gemäß einer der beiden Gleichungen berechnet wird:

$$DSKW'_{\Delta r} = \sum_{i=1}^{k} \left( \frac{\dfrac{\Phi_{\Delta r}(\omega_{1,i}, d)}{\Phi_{\Delta r}(\omega_{2,i})}}{\dfrac{\Phi_{\Delta r}(\omega_{2,i})}{\Phi_{\Delta r}(\omega_{3,i})}} \right)$$

$$DSKW'_{\Delta n} = \sum_{i=1}^{k} \left( \frac{\dfrac{\Phi_{\Delta n}(\omega_{1,i}, d)}{\Phi_{\Delta n}(\omega_{2,i})}}{\dfrac{\Phi_{\Delta n}(\omega_{2,i})}{\Phi_{\Delta n}(\omega_{3,i})}} \right)$$

mit

$\omega_{1,i}$:     diskrete Frequenzwerte des ersten Frequenzbereichs;

$\omega_{2,i}$:     diskrete Frequenzwerte des zweiten Frequenzbereichs;

$\omega_{3,i}$:     diskrete Frequenzwerte des dritten Frequenzbereichs; und

k:     Anzahl der diskreten Frequenzpunkte.

26. Vorrichtung nach einem der Ansprüche 22 bis 25, ferner mit einer Korrektureinrichtung zum Korrigieren des Dämpferschadenskennwertes anhand von mindestens einem Fahrzustandssignal.

27. Vorrichtung nach Anspruch 26, wobei das Fahrzustandssignal ausgewählt ist aus der Gruppe Fahrgeschwindigkeit, Drosselklappenwinkel, Drehmoment, Motordrehzahl, Gangstufe, Betriebszustand der Wandlerkupplung oder Stellung des Kupplungsschalters.

28. Vorrichtung nach einem der Ansprüche 22 bis 27, ferner mit einer Einrichtung zum Vergleichen des Dämpferschadenskennwertes mit einem Schwellwert.

29. Vorrichtung nach Anspruch 28, wobei ein Dämpferschaden vorliegt, sobald der Dämpferschadenskennwert den Schwellwert übersteigt.

Fig. 1

Fig. 2

Dämpferschadenskennwert VL

Zeit [s]

Fig. 3

$\sqrt{DSKW_{\Delta r}}$

– – – – –  Stellung Komfort
————— Stellung Sport

EP 1 162 443 A2

Fig. 4

Autoleistungsdichtespektrum Radiusänderung Reifen HL

- - - - - Stellung Komfort
───── Stellung Sport

[m^2/Hz]

Auswerte-intervall    Referenz-intervall1    Referenz-intervall2    Frequenz [Hz]

Fig. 5

Drehge-schwindigkeits-signal bzw. Radiusänderung

Bandpaß

Betrag Maxima und Minima

Tiefpaß1

Auswerte-Intervall

Drehge-schwindigkeits-signal bzw. Radiusänderung

Bandpaß

Betrag Maxima und Minima

Tiefpaß1

Referenz-Intervall

Division

Tiefpaß2

$DSKW_{\Delta n,F}$ bzw. $DSKW_{\Delta r,F}$

Fig. 6

Fig. 7

Fig. 8

**Fig. 9**

**Fig. 10**

Auswerte- bzw.
Referenzbereich

Frequenzachse

$\omega_{x,i}$  $\omega_{x,i+1}$

$x = 1, 2$ oder $3$

Fig. 11